# EUROPEAN PATENT APPLICATION

(11) **EP 4 826 268 A1**
(43) Date of publication of application: **21.10.2026**
(21) Application number: 25472010.5
(22) Date of filing: 15.04.2025
(51) Int. Cl.: F16C 13/02, B65G 39/09

(54) **MODULAR ROLLER**

(71) Applicant: Niko-M-66 Ltd, 4006 Plovdiv (BG)
(72) Inventor: Nikolov, Dimitar, 4300 Karlovo (BG); Dimitrov, Nikolay, 1408 Sofia (BG); Dimitrova, Krasimira, 1408 Sofia (BG)
(74) Representative: Benatov, Samuil Gabriel

(57) **Abstract**

The invention relates to a roller applicable in continuous transport equipment, in particular for belt conveyors and roller conveyors.

The modular roller comprises a cylindrical body composed of three sequentially arranged tubular modules - two end modules (I) and one middle module (II) which inner diameter is equal to the outer diameter of the end modules, which consists of a metal cylindrical tube (1) with a centrally located shaft (4), attached to the tube (1) by means of a flange (5) with at least two radial spokes (5'), distributed symmetrically and evenly along the circumference of the flange, which is fixedly mounted to one end of the shaft, and the free ends of the spokes are welded to the inner surface of the tube (1). At the other end of the shaft (4), there is a bearing unit, with a bearing body (8), which is a metal tube in which at least one bearing (7) attached to the shaft (4) is mounted, with a seal (6) and a cap (9) with a mounting neck (9').

## Description

### TECHNICAL FIELD

The invention relates to a roller applicable in continuous transport equipment, in particular for belt conveyors and roller conveyors.

### PRIOR ART

A roller US6516942 B2 is known, which is closed at all sides, and through each of its faces passes a corresponding fixed shaft, on which with an inner ring fixed to the shaft is fixed at least one bearing, the outer ring of which is fixed to a bearing body closed on the inside, which passes into a front lid connected to the cylindrical body of the roller and rotating together with it. Labyrinth seals against moisture penetration are located between the outer face of the bearing and the environment, since the bearing body is open to the outside and closed on the inside and predisposes easy entry of moisture and dirt from the environment.

A roller is known from international application WO2007070992, which consists of a cylindrical body - a metal tube, in which a shaft is centrally and coaxially located, which is mounted to the tube by means of two flanges with radial spokes, distributed symmetrically with respect to the axis of rotation of the shaft, the flanges are located and welded at both ends of the shaft, and the ends of the spokes are welded to the inner surface of the tube. At each end of the shaft in front of the flanges, bearings are typically attached, the outer rings of which are attached to a corresponding bearing body. The bearing body is through and has a threaded cap screwed onto its outer end, which ends with a mounting neck. A seal is mounted at the inner end of each bearing body to protect the bearing from moisture penetration and contamination. The seal consists of a rubber seal and an annular flange-cap made of engineering plastic that closes the cavity of the bearing body, both parts are fixedly attached to the bearing body and have a technological clearance to the roller's shaft. This configuration leaves direct access of moisture and dirt to the bearing.

The production of this roller is complicated by the need to weld the spokes to the roller tube inside the tube, which is inconvenient, requires high precision and is technically complex, resulting in low productivity and high product cost. In addition, the design of the roller does not allow for easy and cost-effective production of rollers of different lengths.

### SUMMARY OF THE INVENTION

The object of the invention is to create a roller which production is optimized and allows production of rollers of different lengths.

This object is achieved by creating a modular roller and a method for its production.

The modular roller according to the invention consists of a cylindrical body, composed of three sequentially arranged tubular modules - two identical end modules and one middle module. Each end module consists of a metal cylindrical tube, in which a shaft is centrally and coaxially arranged. The shaft is attached to the tube by means of a flange with at least two radial spokes, which are distributed symmetrically and evenly along the circumference of the flange, which is fixedly mounted to one end of the shaft, and the free ends of the spokes are welded to the inner surface of the metal tube. At the other end of the shaft, a bearing unit is mounted, consisting of a bearing body, which is a metal tube with an outer end and an inner end, at least one bearing, the inner ring of which is attached to the shaft, and the outer ring is attached to the bearing body. A seal is located in a gap between the inner end of the bearing body and the shaft, and a cap with an external thread is mounted to the outer end of the bearing body, which cap has a centrally located mounting neck on its outer side. The middle module consists of a cylindrical metal tube, the inner diameter of which is equal to the outer diameter of the metal tube of the end module, wherein the respective ends of the two end modules, in which the flanges are located, are fixedly attached to both ends of the middle module, wherein the metal tube of the middle module overlaps the metal tubes of the end modules by 1/3 to 1/7 of the length of the end modules, preferably 1/5 of the length of the end modules.

In one embodiment of the invention, the seal is a labyrinth seal, and preferably the labyrinth seal consists of two parts, a rotating part fixed to the roller's shaft so as to rotate together with the shaft, and a stationary part fixed to the bearing body, wherein the rotating part of the seal is made as a disk, transversely on which three or more concentric rings are arranged, which height decreases in radial direction when moving away from the central axis, forming concentric grooves between rings with different depths that decrease in radial direction, so that in cross section the rotating part has a comb-shaped profile, wherein concentric rings/ribs of the stationary part of the seal enter the grooves, as well as concentric ribs in the edge of the bearing body, thus there are labyrinth cavities between the two parts of the labyrinth seal. There is a clearance between the ribs of the moving and stationary parts, which allows free rotation.

It is possible that in the roller the diameter of the flanges is larger than the outer diameter of the caps.

The object is also achieved by a method for manufacturing a modular roller according to the invention, comprising middle module and two identical end modules, which method comprises the following steps:
- Providing metal cylindrical tubes of a given length and diameter, the inner diameter of the tube of the middle module is equal to the outer diameter of the tubes of the two end modules;
- Providing shafts for the end modules with a length corresponding to the length of the tubes of the end modules, wherein a bearing body is mounted on each of the shafts by means of at least one bearing, which is hammered onto one end of the shaft, a seal is mounted at the inner side of the bearing body, between the bearing body and the shaft, and a cap with a mounting neck is screwed onto the outer end of the bearing body by means of a thread, wherein a flange with at least two radial spokes is fixedly mounted on the other end of the shaft, the spokes are distributed symmetrically and evenly along the circumference of the flange;

- Mounting the shafts to the tubes of the two end modules, wherein the free ends of the spokes of the flanges are welded to the inner surface of the tubes;
- Placing the ends of the end modules, in which the flanges are located, at both ends of the middle module and connecting these ends, the overlap between the tubes is 1/3 to 1/7 of the length of the end modules, preferably 1/5 of the length of the end modules.

It is possible to connect the middle module to the end modules by pressing.

Alternatively, it is possible to connect the middle module to the end modules by welding.

Placing the flanges with the spokes inward from the ends of the roller reduces the bending moment along the length of the roller by up to 50%, unloads the bearings and increases the pressure of the mounting neck in the support.

The stepped design of the outer tube, with a reduction of the diameter at both ends, leads to better control of the conveyor belt because it reduces lateral belt displacement.

An advantage of the roller is that the modular design makes it easier to manufacture, and the roller production method is optimized, with increased productivity and reduced cost of the rollers. The modular design allows for easier production of rollers of different lengths using different middle modules, which are simply metal tubes of different lengths.

Another advantage of the modular roller is that during the production of the end modules, the welding points of the flange's spokes to the end module tube are easily accessible to the welding tool. This facilitates the production process, increases productivity and reduces the cost of the roller.

### DESCRIPTION OF THE ATTACHED FIGURES

The invention is explained in more details with an exemplary, nonlimiting the scope of protection, embodiment of the roller, shown in the attached figures, where:

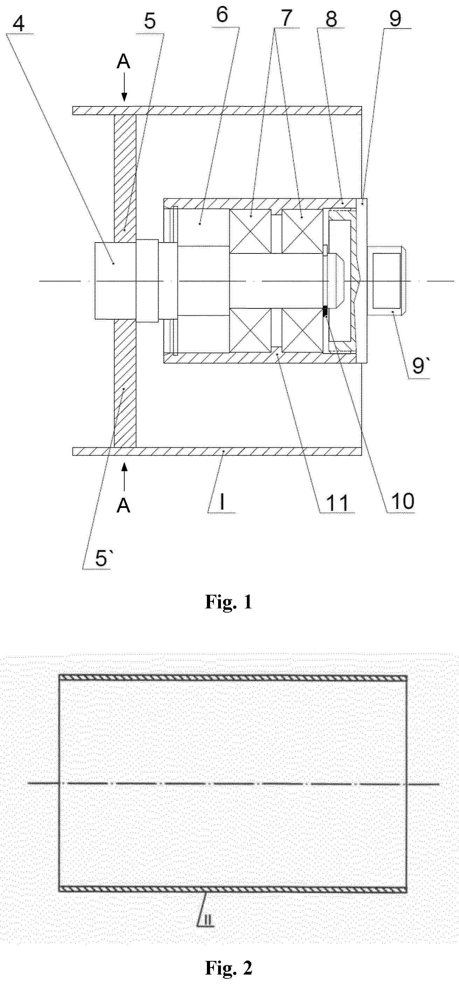

- Fig. 1 is longitudinal section of end module of a roller according to the invention;
- Fig. 2 is longitudinal section of middle module of a roller according to the invention;
- Fig. 3 is longitudinal section of assembled modular roller according to the invention;
- Fig. 4 is longitudinal section through the rear end of the bearing unit with a labyrinth seal according to the invention.
- Fig. 5 is cross-section along A-A of Fig. 1 in an embodiment of the flange with two spokes;
- Fig. 6 is cross-section along A-A of Fig. 1 in an embodiment of the flange with four spokes.

### EXEMPLARY EMBODIMENT AND OPERATION OF THE INVENTION

In the embodiment of the invention shown in the figures, the modular roller consists of a cylindrical body, which is made of three sequentially arranged tubular modules - two identical end modules I and one middle module II. The two end modules I comprise the rotating parts of the roller - the shafts and the bearing units. Each end module I consists of a metal cylindrical tube 1, in which a shaft 4 is centrally and coaxially arranged.

The shaft is a solid metal cylindrical profile. Preferably, along its length, the shaft has annular stops with a larger radius, the function of which is to limit the entry of the flange and bearings on the shaft during mounting.

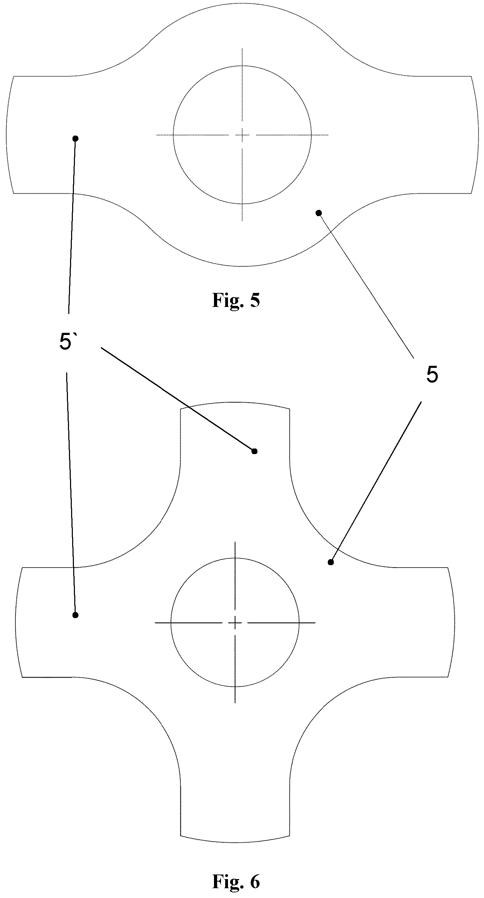

The length of the shaft 4 is commensurate with the length of the tube of the end module. The shaft is attached to the tube 1 by means of a flange 5, which is a disk with a central hole, the diameter of which corresponds to the diameter of the shaft. Two or more radial spokes 5' extend radially from the periphery of the flange, which are distributed symmetrically and evenly along the circumference of the flange. For example, if the spokes 5' are two (Fig. 5), then they are located 180° from each other, if the spokes are three - 120° from each other, and if they are four - 90° from each other (Fig. 6). The number of spokes 5' depends on the diameter of the roller and its load capacity, and for rollers with a larger diameter and/or a larger load capacity it is preferable to choose larger number of spokes. The diameter of the flange 5 is such that it is from 30% to 70%, preferably between 40% to 55% of the internal diameter of the tube of the end module, thus creating free access to the interior of the roller, which helps to cool it and to adapt the outside of the roller to the ambient temperature. The flange 5 is fixedly mounted to one end of the shaft by either hammering in and welding, or by threading, for this purpose, one end of the shaft has an external thread, and the central hole of the flange has a corresponding internal thread. The free ends of the spokes 5' are welded to the inner surface of the metal tube near one end thereof. This design simplifies the manufacture of the end module, because the welds are made more easily compared to the roller of the prior art.

At the other end of the shaft 4, a bearing unit is mounted, consisting of a bearing body 8, which is a metal tube with outer end and inner end, the inner end of the bearing body 8 is directed towards the flange 5. At least one bearing 7 is arranged in the bearing body 8, the inner ring of which is fixed to the shaft 4, and the outer ring is fixed to the inner surface of the tube of the bearing body 8. In the example given in the figures, there are two bearings 7 with a distance between them, which contributes to greater strength and stability of the bearing unit during operation of the roller. For the purposes of mounting the bearings, one or two abutment rings 11 are provided in the middle part of the bearing body 8 on its inner surface, which serve to limit and position the bearings 7 at the required distance from each other. In another embodiment, the bearing 7 can be only one, but wide. The number of bearings 7 also depends on the size of the roller, the single-bearing variant is suitable for rollers with a smaller diameter. Different types of bearings can be used. The two end bodies can have the same or different number of bearings, and also the same or different type of bearings, which does not affect the operation of the roller.

Preferably, a locking element is mounted on the outer end of the shaft 4 for fixing the bearings in axial direction. The locking element can be, for example, a lock washer 10 arranged in a corresponding annular groove in the front end of the shaft 4, or a nut screwed onto an external thread in the front end of the shaft.

In the gap between the inner end of the bearing body and the shaft, a seal 6 is arranged to protect against the penetration of moisture and solid contaminants. A metal cap 9 is mounted to the outer end of the bearing body, which on one side has an external thread, through which it is screwed to an internal thread in the bearing body 8, and on its outer side, there is a mounting neck 9', designed for fastening to a roller's support. The mounting neck 9' can have a round cross-section, sector, digon, hexagon or other suitable shape. The cap protects the bearings by preventing the entry of moisture and various contaminants into the bearing body.

The seal of the bearing unit is preferably a labyrinth seal.

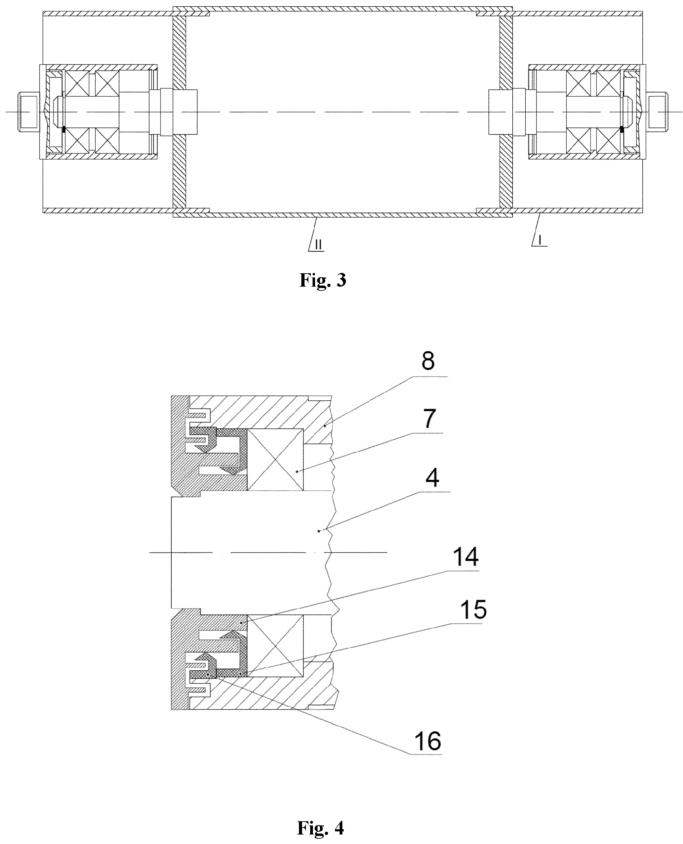

An improved version of the labyrinth seal 6 is shown in Figure 5. The labyrinth seal 6 consists of two parts, a rotating part 14 fixed to the shaft 4 of the roller so as to rotate together with the shaft 4, and a stationary part fixed to the inner surface of the tube of the bearing body 8. The rotating part of the seal is made as a disc, transversely to which three or more concentric rings are arranged, which height generally decreases in radial direction when moving away from the central axis, forming concentric grooves between them with different depths, which also decrease in radial direction, so that in cross section the rotating part has a comb-shaped profile. The version shown in Figure 4 has four concentric rings and three grooves between them. The rotating part 14 of the seal can be made of metal or of high-strength engineering plastic. The grooves of the rotating part 14 receive concentric rings of the stationary part 15, 16 of the seal, which correspond to the number of grooves. The stationary part can be made as a single monolithic element or as two or more separate elements 15, 16 (as shown in Figure 4) each of which is directly or indirectly fixed to the inner surface of the bearing body 8. In the embodiment shown in Figure 4, an annular groove is made in the edge of the bearing body 8 in which the outermost ring of the rotating part 14 is located. The stationary part can consist of seals 15, 16 of elastic material (for example, rubber, polyurethane or other known suitable material), which have outer rings. In another embodiment, the stationary part can consist of bushings made of engineering plastic with a similar configuration. The profile of the rings of the two parts of the labyrinth seal is chosen to be such as to make it as difficult as possible for moisture and dirt to penetrate through the seal, while leaving a minimum technological gap between adjacent rings.

A series of cavities are formed between the rings of the moving and stationary parts, forming a labyrinth clearance that allows the free rotation of the two parts of the seal relative to each other, that is, it allows the free rotation of the rotating part relative to the stationary part of the labyrinth seal.

The labyrinth seal can be contact, using elastic seals for the stationary part, or non-contact, when bushings of engineering plastic are used for the stationary part.

The seal cavities gradually fill with dust. The labyrinth seal design prevents direct access of moisture and contaminants to the bearings and ensures a slower filling of the cavities with solid contaminants, thereby extending the life of the roller.

The middle module II consists of a cylindrical metal tube, the inner diameter of which is equal to the outer diameter of the metal tube of the end module I. The length of the middle module II can be different, depending on the required length of the roller. The ratio between the lengths of the tubes of the modules can be different, for example, the length of the middle module can be twice or more, greater than the length of the end module, but it is possible for the middle module to be of the same or less length than the end modules. In one extreme embodiment, the middle module is an annular sleeve that connects the end modules, which almost touch each other. To both ends of the middle module II, the respective ends, in which the flanges 5 are located, of the two end modules I are fixedly attached. The metal tube of the middle module overlaps the metal tubes 1 of the end modules by 1/3 to 1/7 of the length of the end modules, preferably 1/5 of the length of the end modules. The larger the diameter of the tube, the greater the load on the roller is and accordingly the overlap should be larger, for example 1/4 or 1/3, and when the diameter of the roller is smaller and the load is less, then the overlap can be smaller, for example 1/6 or 1/7. If the overlap is less than 1/7, the connection between the modules will not be stable enough. Overlaps over 1/3 do not bring benefits and unnecessarily increase the weight of the roller and the cost of materials for production.

The operation of the roller is as follows:
In the modular roller according to the invention, protection against moisture penetration is provided in the following way. In the bearing unit, the caps, with the bearing bodies and labyrinth seals, provide a chamber for the bearings inaccessible to moisture, which prevents the moisture in the environment to affect the bearings. On the other hand, rainwater and other water, dust and any semi-liquid fractions that have entered the cylindrical body 1, under the action of centrifugal forces, flow along the inner surface of the cylindrical body 1 to the outside without having access to the bearings.

The flanges 5 further assist in the drainage of contaminants by preventing them from slipping into the cavities of the bearing bodies 8, which are additionally protected by the seal 6.

The modular roller according to the invention is manufactured by a method according to the invention, which comprises the following steps:
- Providing metal cylindrical tubes of a given length and diameter, the inner diameter of the tube of the middle module II being equal to the outer diameter of the tubes of the two end modules I;
- Providing shafts 4 for the end modules I with a length corresponding to the length of the tubes 1 of the end modules;
- The bearing units are assembled by hammering the bearings 7 and the stationary part of the bearing seal into the metal tube of the bearing body 8;
- The flange 5, with the spokes 5', and the rotating part 14 of the labyrinth seal 6 are fixedly mounted on the shaft 4. The flange is mounted by hammering in and/or welding, or by threading, which is made on both elements;
- The bearing body is mounted on the shaft 4, wherein the inner rings of the bearings 7 are hammered onto the front part of the shaft 4 up to the annular stop. After that, the bearings are fixed in the front part of the shaft 4, preferably with lock washer 10, nut or other fixing element, limiting the displacement of the bearings relative to the shaft 4 in axial direction;
- The front part of the bearing body 8 is closed by the cap 9 with thread, which is screwed into the internal thread of the tube of the bearing body 8;
- Mounting the shafts 4 with the bearing units to the tubes 1 of the two end modules I, the free ends of the spokes 5' of the flanges 5 are welded to the inner surface at one end of the tubes 1, the welding points are easily accessible from one end of the tubes 1;
- Placing the ends of the end modules I, in which the flanges are located, at both ends of the middle module II and connecting these ends, the overlap between the tubes of the end I modules and the middle II module is 1/3 to 1/7 of the length of the end modules I, preferably 1/5.

The connection of the tube of the middle module II with the tubes of the end modules I can be done by pressing or by welding their ends.

The bearings 7 are hammered onto the shaft 4 and into the bearing body 8 with an allowable working clearance so that the roller can operate normally.

When there are two bearings 7, they are hammered into the bearing body 8 on both sides until they abut at an internal support ring 11, which is provided in the middle parts of the tube of the bearing body.

It will be clear to those skilled in the art that various modifications of the modular roller are possible, which are also within the scope of the invention, as defined in the appended claims. All parts of the invention can be replaced by technically equivalent elements.

The reference numbers of the technical features are included in the claims solely for the purpose of increasing the comprehensibility of the claims and therefore these reference numbers have no limiting effect on the interpretation of the elements indicated by these reference numbers.

## Claims

1. Modular roller comprising a cylindrical body, fixedly connected to a shaft to which bearing units are mounted, **characterized in that** the cylindrical body is composed of three sequentially arranged tubular modules - two end modules (I) and one middle module (II), wherein each end module consists of a metal cylindrical tube (1), in which a shaft (4) is centrally and coaxially arranged and it is attached to the tube (1) by means of a flange (5) with at least two radial spokes (5'), which are distributed symmetrically and evenly along the circumference of the flange (5), which is fixedly mounted to one end of the shaft, and the free ends of the spokes (5') are welded to the inner surface of the tube (1), wherein at the other end of the shaft (4) a bearing unit is mounted, consisting of a bearing body (8), which is a metal tube with an outer end and an inner end directed towards the flange (5), at least one bearing (7), the inner ring of which is attached to the shaft (4), and the outer ring of the bearing is attached to the inner surface of the tube of the bearing body (8), wherein a seal (6) is located in a gap between the inner end of the bearing body (8) and the shaft (4), and a cap (9) with an external thread is mounted to the outer end of the bearing body (8), said cap (9) has a centrally located mounting neck (9') on its outer side, wherein the middle module (II) consists of a cylindrical metal tube, the inner diameter of which is equal to the outer diameter of the metal tube (1) of the end module (I), wherein the respective ends of the two end modules (I), in which the flanges (5) are located, are fixedly attached to both ends of the middle module (II), wherein the metal tube of the middle module (II) overlaps the metal tubes (1) of the end modules (I) by 1/3 to 1/7, preferably 1/5 of the length of the end modules.

2. The modular roller according to claim 1, **characterized in that** the seal (6) is a labyrinth seal.

3. The modular roller according to claim 2, **characterized in that** the labyrinth seal consists of two parts - a rotating part (14), fixed to the shaft (4) of the roller with the ability of rotation together with the shaft (4), and a stationary part (15, 16) fixed to the bearing body (8), wherein the rotating part (14) of the seal is made as a disk with a central hole for the shaft (4), and transversely the disk three or more concentric rings are arranged, the height of which decreases in radial direction when moving away from the central axis, said concentric rings forming concentric grooves between them with different depths that decrease in radial direction when moving away from the central axis, so that in cross section the rotating part has a comb-shaped profile, wherein concentric rings of the stationary part of the seal (15, 16) enter the grooves, which rings are fixedly attached to the inner surface of the bearing body (8), thus, there are labyrinth cavities between the two parts of the labyrinth seal, wherein there are clearances between the concentric rings of the moving and stationary parts, allowing the free rotation of the two parts of the labyrinth seal relative to each other.

4. The modular roller according to the preceding claims, **characterized in that** the bearings in each bearing unit are two, sequentially arranged and at a distance from each other.

5. The modular roller according to the preceding claims, **characterized in that** a locking element is mounted on the outer end of the shaft for locking the bearings in axial direction.

6. The modular roller according to the preceding claims, **characterized in that** the diameter of the flanges (5) is larger than the outer diameter of the caps (9).

7. Method for manufacturing a modular roller with design as described in claims 1 to 6, **characterized by** the following steps:
- Providing metal cylindrical tubes of a given length and diameter, wherein the inner diameter of the tube of the middle module (I) is equal to the outer diameter of the tubes (1) of the two end modules (II);
- Providing shafts (4) for the end modules (I) with a length corresponding to the length of the tubes (1) of the end modules, wherein a bearing body (8) is mounted on each of the shafts (4) by means of at least one bearing (7), which is hammered onto one end of the shaft (4), a seal (6) is mounted on the outside of the bearing body (8), between the bearing body (8) and the shaft (4), and a cap (9) with a mounting neck (9') is screwed onto the outer end of the bearing body (8) by means of a thread, wherein a flange (5) with at least two radial spokes (5') is fixedly mounted on the other end of the shaft (4), and the spokes are distributed symmetrically and evenly along the circumference of the flange (5);
- Mounting the shafts (4) to the tubes (1) of the two end modules, wherein the free ends of the spokes (5') of the flanges (5) are welded to the inner surface of the tubes (1);
- Placing the ends of the end modules (I), in which the flanges (5) are located, at both ends of the middle module (II) and connecting these ends, the overlap between the tubes of the modules is 1/3 to 1/7, preferably 1/5, of the length of the end modules.

8. The method for manufacturing a modular roller according to claim 7, **characterized in that** the connection of the tubes of the middle module (II) and the end modules (I) is carried out by pressing.

9. The method for manufacturing a modular roller according to claim 7, **characterized in that** the connection of the tubes of the middle module II and the end modules I is carried out by welding.
